# EUROPEAN PATENT APPLICATION

(11) **EP 1 715 197 A1**
(43) Date of publication of application: **25.10.2006**
(21) Application number: 05425252.3
(22) Date of filing: 21.04.2005
(51) Int. Cl.: F16B 2/06, F16H 57/02, F16D 1/08

(54) **Drive member with fastening device comprising two half-shells for coupling the member to an output shaft of a reduction gear**

(71) Applicant: Tecnoingranaggi Riduttori S.r.l. (con Unico Socio), 40017 San Giovanni in Persiceto (IT)
(72) Inventor: Matteuzzi, Alessandro, 40050 Castello D'Argile (IT)
(74) Representative: Franzolin, Luigi

(57) **Abstract**

A drive member (200), e.g. a pinion, for assembly to an output shaft (24) of a reduction gear (10). The drive member has a fastening device (300) for fastening the drive member to the output shaft (24); the fastening device (300) in turn has at least two half-shells (301a, 301b) which are tightened onto the output shaft (24) by means of screws; and two weight-reducing cuts (305a, 305b) are made to assist deformation of the two half-shells (301a, 301b) as they are tightened onto the output shaft (24).

## Description

The present invention relates to a drive member for reduction gears, in particular epicyclic reduction gears, and which may be a pinion.

Reduction gears are known to comprise a drive member, in particular a pinion, fitted to an output shaft.

Numerous methods are employed to fix a drive member to an output shaft.

One of these employs a straightforward key coupling.

Known methods, however, have all proved unreliable, especially when high torque transmission is involved.

It is therefore a main object of the present invention to provide a drive member having an innovative device for assembly to an output shaft of a reduction gear, in particular an epicyclic reduction gear.

According to the present invention, there is provided a drive member for reduction gears, as claimed in Claim 1.

The drive member according to the present invention is particularly advantageous for precision reduction gears, particularly precision epicyclic reduction gears used in fields such as robot engineering.

A non-limiting embodiment of the present invention will be described by way of example with reference to the accompanying drawings, in which:
Figure 1 shows a partly sectioned assembly drawing of a precision epicyclic reduction gear featuring a drive member with an innovative fastening device in accordance with the invention;
Figure 2 shows a front view of a drive member with the fastening device according to the invention;
Figure 3 shows a plan view of the drive member with the Figure 2 fastening device;
Figure 4 shows a side view of the drive member and fastening device in Figures 1, 2, 3;
Figure 5 shows a longitudinal section along line A-A of the Figure 2 front view;
Figure 6 shows a cross section along line B-B of the Figure 3 plan view;
Figure 7 shows a cross section along line C-C of the Figure 3 plan view.

For a clear understanding of the present invention, a brief description will now be given of a known precision epicyclic reduction gear comprising a drive member with an innovative fastening device in accordance with the invention.

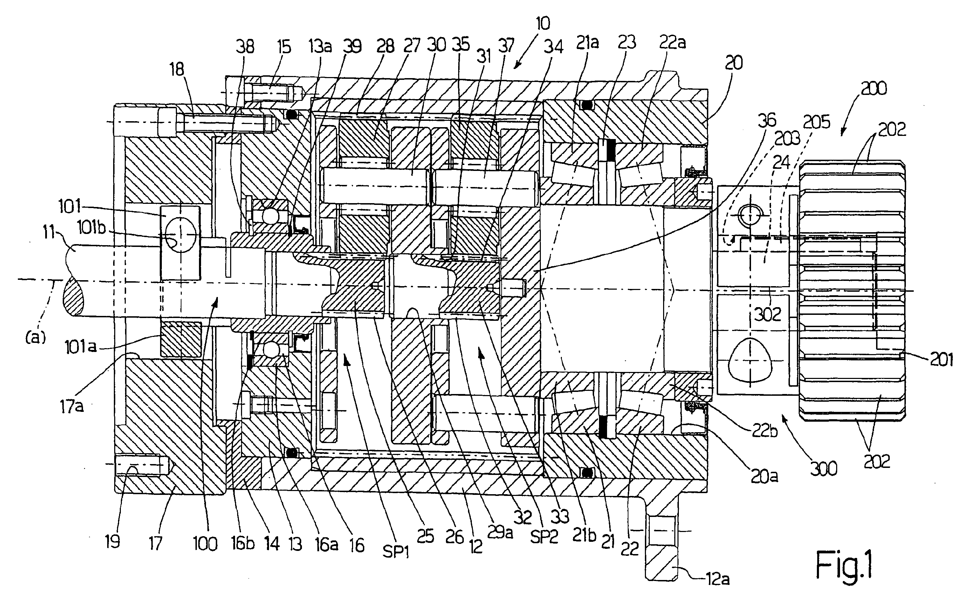

Number 10 in Figure 1 indicates a known epicyclic reduction gear comprising an elastic transmission bush 100.

Motion is transmitted to epicyclic reduction gear 10 by a transmission shaft 11 connected mechanically to a motor (not shown).

Transmission shaft 11 has a longitudinal axis of symmetry (a), which is also the longitudinal axis of symmetry of reduction gear 10.

In known manner, epicyclic reduction gear 10 comprises a substantially tubular, flanged outer casing 12.

Outer casing 12 comprises a flange 12a, which is fixed by known means (not shown) to a support (not shown).

Outer casing 12 is closed at a first end by a substantially annular member 13 retained inside outer casing 12 by a flange 14 screwed to casing 12 by a number of screws 15 (only one shown in Figure 1).

As shown in Figure 1, member 13 has a central hole 13a for housing a bearing 16.

The outer cage 16a of bearing 16 is fixed by known means to the wall of central hole 13a, while the inner cage 16b of bearing 16 is made integral (by known means) with elastic transmission bush 100.

On the side facing elastic bush 100, reduction gear 10 is closed by a cover 17 screwed by a number of screws 18 to flange 14 and to member 13.

Cover 17 has a number of threaded holes 19 (only one shown in Figure 1) by which to assemble the motor (not shown) .

As shown in Figure 1, cover 17 has a central hole 17a housing an end portion of drive shaft 11, elastic bush 100, and a clamp 101, which, as will be seen, provides for tightening elastic bush 100 onto drive shaft 11.

On the opposite side to cover 17, an annular member 20 is fixed inside outer casing 12.

Member 20 has a central hole 20a housing two bearings 21, 22 separated by spacers 23.

As in known methods, the outer cages 21a, 22a of bearings 21, 22 are fixed to the wall of hole 20a, while the inner cages 21b, 22b are integral with an output shaft 24 connected mechanically to an end user device (not shown).

Precision epicyclic reduction gear 10 between members 13 and 20 comprises two reduction stages SP1, SP2 (see below).

Elastic transmission bush 100 is integral (in known manner) with a shaft 25 supporting a sun gear 26 of the first reduction stage SP1.

Sun gear 26 meshes with a number of planet gears 27 (only one shown in Figure 1) which, in turn, mesh with a fixed ring gear 28 on the inner wall of casing 12.

Each planet gear 27 is connected mechanically to a planet carrier 29 by means of a relative pin 30.

In short, the first reduction stage SP1 comprises sun gear 26, planet gears 27, fixed ring gear 28, planet carrier 29, and pins 30.

Planet carrier 29 has a through hole 29a having teeth 31 which mesh with a spline 32 on a shaft 33.

Shafts 25 and 33 have the same longitudinal axis of symmetry (a).

Shaft 33 also comprises a sun gear 34 of the second reduction stage SP2.

Sun gear 34 meshes with a number of planet gears 35 (only one shown in Figure 1), which mesh simultaneously with fixed ring gear 28.

Each planet gear 35 is connected mechanically to a planet carrier 36 by means of a relative pin 37.

In short, the second reduction stage SP2 comprises sun gear 34, planet gears 35, fixed ring gear 28, planet carrier 36, and pins 37.

Sun gear 36 is integral with output shaft 24 by means of known means.

The rotational speed of drive shaft 11 has therefore undergone two reductions at the two reduction stages SP1, SP2.

Output shaft 24 of reduction gear 10 is fitted with a drive member 200 by means of an innovative fastening device 300.

Drive member 200 - in this case, a pinion - comprises in known manner a substantially cylindrical main body 201 having a number of teeth 202.

In actual use, i.e. when pinion 200 is fitted to output shaft 24 as shown in Figure 1, the central axis of symmetry of pinion 200 coincides with axis (a) of reduction gear 10, and the axes of teeth 202 are parallel to axis (a).

A longitudinal through hole 203 (also of axis (a)) is formed in pinion 200, and has a splined seat 204 engaged by a key 205 on output shaft 24.

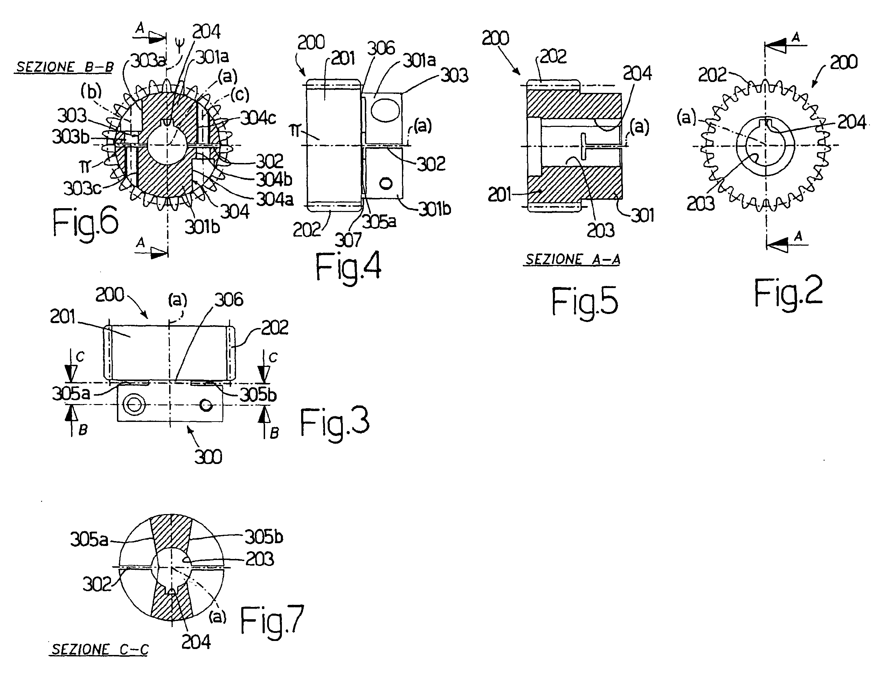

As shown particularly in Figures 2-7, device 300 for fastening pinion 200 to output shaft 24 is formed in one piece with pinion 200.

Fastening device 300 comprises a substantially cylindrical main body 301 formed in one piece with main body 201 of pinion 200.

In the embodiment shown in the accompanying drawings, main body 301 is smaller in diameter than main body 201, and both longitudinal through hole 203 and splined seat 204 continue inside device 300 (as shown, for example, in Figure 5).

Main body 301 has a longitudinal cut 302 (Figures 4, 6, 7) extending substantially in a plane π containing axis (a).

Main body 301 is therefore divided by longitudinal cut 302 into two half-shells 301a and 301b.

As shown in Figures 3, 4, 6, half-shells 301a, 301b have two through holes 303 (of longitudinal axis (b)) and 304 (of longitudinal axis (c)), which are located symmetrically with respect to a longitudinal plane of symmetry ψ perpendicular to plane π.

More specifically, as shown in Figure 6, through hole 303 comprises, in series, a first portion 303a and a second portion 303b formed in half-shell 301a; and a third portion 303c formed in half-shell 301b.

Portions 303b and 303c are smaller in diameter than portion 303a, and portion 303c is threaded.

Similarly, as shown in Figure 6, through hole 304 comprises, in series, a first portion 304a and a second portion 304b formed in half-shell 301b; and a third portion 304c formed in half-shell 301a.

Portions 304b and 304c are smaller in diameter than portion 304a, and portion 304c is threaded.

Portions 303a, 304a house the heads of respective screws (not shown), the shanks of which are inserted inside portions 303b, 303c and 304b, 304c respectively.

Obviously, the screw inserted inside through hole 303 screws into threaded portion 303c, and the screw inserted inside through hole 304 screws into threaded portion 304c.

As shown in Figures 3, 4, 7, two weight-reducing cuts 305a, 305b are made between pinion 200 and fastening device 300, are substantially perpendicular to cut 302, and are located on opposite sides of plane ψ.

Half-shell 301a is therefore attached to pinion 200 by a portion 306, while cuts 302, 305a, 305b only leave a portion 307 between pinion 200 and half-shell 301b. Cuts 305a, 305b serve to make portions 306, 307 as small as possible, so as to increase the deformability of half-shells 301, 301b and better tighten the half-shells onto output shaft 24.

In actual use, since pinion 200 and fastening device 300 are formed in one piece from steel (e.g. 18 NiCrMo 5 steel), the elasticity of portions 306, 307 is used to bring half-shells 301a, 301b together and tighten them onto output shaft 24 by means of said screws.

As shown in Figure 1, fastening device 300 is located between pinion 200 and annular member 20 of reduction gear 10.

The advantages of the drive member according to the present invention substantially lie in the fastening device according to the present invention being formed in one piece with the drive member, and ensuring firm tightening of the drive member onto the output shaft of the reduction gear; which advantages become increasingly evident in direct proportion to the precision of the reduction gear. A drive member with a fastening device in accordance with the invention may be used to particular advantage, for example, in epicyclic reduction gears employed in robot engineering.

## Claims

1. A drive member (200) for assembly to an output shaft (24) of a reduction gear (10); the drive member comprising a fastening device (300) for fastening said drive member (200) to said output shaft (24); and the drive member (200) being **characterized in that** said fastening device (300) comprises at least two half-shells (301a, 301b) tightened onto said output shaft (24) by tightening means.

2. A drive member (200) as claimed in Claim 1, **characterized in that** said half-shells (301a, 301b) are formed by means of at least one cut (302) made in a substantially cylindrical main body (301); said cut being made in a plane (π).

3. A drive member (200) as claimed in Claim 2, **characterized in that** said plane (π) contains a longitudinal axis (a) of substantial symmetry of said drive member (200) and said fastening device (300).

4. A drive member (200) as claimed in either one of Claims 2 and 3, **characterized in that** said half-shells (301a, 301b) have two through holes (303, 304) located symmetrically with respect to a longitudinal plane of symmetry (ψ) through said axis (a) and perpendicular to said plane (π).

5. A drive member (200) as claimed in Claim 4, **characterized in that** one (303) of said through holes comprises, in series, a first portion (303a) and a second portion (303b) formed in a first (301a) of said half-shells, and a third portion (303c) formed in a second (301b) of said half-shells; and the other (304) of said through holes comprises, in series, a first portion (304a) and a second portion (304b) formed in the second (301b) of said half-shells, and a third portion (304c) formed in the first (301a) of said half-shells.

6. A drive member (200) as claimed in Claim 5, **characterized in that** said first portions (303a, 304a) each houses the head of a respective screw.

7. A drive member (200) as claimed in either one of Claims 5 and 6, **characterized in that** said third portions (303c, 304c) are threaded.

8. A drive member (200) as claimed in any one of Claims 2 to 7, **characterized by** also comprising at least two weight-reducing cuts (305a, 305b) substantially perpendicular to said cut (302).

9. A drive member (200) as claimed in Claim 8, **characterized in that** said weight-reducing cuts (305a, 305b) are made between said drive member (200) and said fastening device (300).

10. A drive member (200) as claimed in any one of the foregoing Claims, **characterized by** being formed in one piece with the fastening device (300).

11. A drive member (200) as claimed in any one of the foregoing Claims, **characterized by** being a pinion (200).
